# FASCICULE DE BREVET EUROPEEN

(11) **EP 3 894 162 B1**
(45) Date de publication et mention de la délivrance du brevet: **04.10.2023**
(21) Numéro de dépôt: 19868202.3
(22) Date de dépôt: 02.12.2019
(51) Int. Cl.: B29B 11/16

(54) **PIECE DE TURBOMACHINE COMPORTANT UNE PREFORME FIBREUSE**
TURBOMASCHINENBAUTEIL MIT EINER FASERIGEN VORFORM
TURBOMACHINE COMPONENT COMPRISING A FIBROUS PREFORM

(30) Priorité: 13.12.2018 FR 1872821
(43) Date de publication de la demande: 20.10.2021
(73) Titulaire: SAFRAN AIRCRAFT ENGINES, 75015 Paris (FR)
(72) Inventeur: SCHNEIDER, Julien, 77550 MOISSY-CRAMAYEL (FR); WIELHORSKI, Yanneck, 77550 MOISSY-CRAMAYEL (FR)
(74) Mandataire: Cabinet Beau de Loménie
(86) Numéro de dépôt international: PCT/FR2019/052872
(87) Numéro de publication internationale: WO 2020/120869

(56) Documents cités:
- US-A1- 2011 311 368
- US-A1- 2018 119 550
- DARSHIL U SHAH ET AL: "Modelling the effect of yarn twist on the tensile strength of unidirectional plant fibre yarn composites", JOURNAL OF COMPOSITE MATERIALS, vol. 47, no. 4, 13 mars 2012 (2012-03-13), pages 425-436, XP055618425, USA ISSN: 0021-9983, DOI: 10.1177/0021998312440737
- N K NAIK ET AL: "Twisted impregnated yarns: Elastic properties", JOURNAL OF STRAIN ANALYSIS FOR ENGINEERING DESIGN, vol. 35, no. 2, 1 février 2000 (2000-02-01), pages 83-91, XP055618432, ISSN: 0309-3247, DOI: 10.1243/0309324001514044
- "Glossary of terms" In: "Composites", 1 décembre 2001 (2001-12-01), ASM International, USA, XP055032508, ISBN: 978-0-87-170703-1 pages 1113-1136,

## Description

### Domaine Technique

La présente invention concerne une préforme fibreuse d'une pièce de turbomachine en matériau composite présentant un tissage tridimensionnel formé par une pluralité de torons tissés qui présentent des fibres orientées de manière particulière par rapport à leur ligne moyenne.

### Technique antérieure

Dans le domaine des pièces en matériau composite ayant un renfort fibreux tissé, on oriente habituellement les torons servant au tissage suivant des directions privilégiées afin d'obtenir les propriétés de résistance souhaitée. Par exemple, pour conférer de la résistance à une sollicitation de traction uni-axiale, on oriente une des directions du tissage de manière colinéaire à cette direction d'effort.

Si l'on recherche à conférer à la pièce de la résistance en cisaillement, il est alors nécessaire d'orienter différemment les torons. Une telle modification de l'orientation des torons en vue d'améliorer la résistance au cisaillement peut conduire à un abaissement significatif de la résistance à la traction.

On connaît en outre US 2018/0119550 qui divulgue une aube munie de plateformes possédant un raidisseur et US 2011/0311368 qui divulgue une aube de turbomachine en matériau composite et un procédé pour sa fabrication.

Il demeure souhaitable d'améliorer la résistance au cisaillement de pièces de turbomachine. Il demeure en particulier souhaitable de disposer de pièces de turbomachine qui présentent une résistance au cisaillement améliorée sans que la résistance à la traction ne soit trop affectée.

### Exposé de l'invention

La présente invention vise, selon un premier aspect, une préforme fibreuse d'une pièce de turbomachine présentant un tissage tridimensionnel formé par une pluralité de torons tissés,
la préforme étant caractérisée en ce que, dans un plan de sollicitation en cisaillement de la pièce, tout ou partie des torons présents dans ce plan présentent des fibres formant un angle compris entre 10° et 50° avec leur ligne moyenne.

La ligne moyenne d'un toron correspond à sa direction d'élongation. Elle est définie par la ligne qui joint l'ensemble des barycentres des sections transversales du toron. Le plan de sollicitation en cisaillement est le plan dans lequel s'exercent des efforts de cisaillement. Pour une pièce de turbomachine donnée, l'homme du métier sait identifier le plan de sollicitation en cisaillement dans la mesure où il connaît l'emplacement et la fonction de la pièce dans la turbomachine et donc les contraintes auxquelles elle est soumise.

L'invention repose sur le fait de modifier les angles que font les fibres à l'intérieur des torons présents dans le plan de sollicitation en cisaillement plutôt que de modifier les orientations des torons dans la préforme. Les inventeurs ont constaté que le fait d'orienter les fibres dans les torons comme indiqué plus haut permet avantageusement d'améliorer la résistance en cisaillement de la pièce. Cette solution présente l'avantage de ne pas affecter les orientations des torons dans le tissage et donc notamment d'éviter de trop affecter la résistance à la traction de la pièce.

Dans un exemple de réalisation, ledit angle est compris entre 30° et 50°.

Une telle orientation des fibres permet avantageusement d'améliorer davantage encore la résistance en cisaillement de la pièce de turbomachine.

Cet angle est par exemple compris entre 40° et 50°ou entre 30° et 45° et est par exemple sensiblement égal à 45°.

Dans un exemple de réalisation, la préforme comprend des torons présents dans ledit plan de sollicitation en cisaillement et s'étendant le long d'une direction de sollicitation en traction de la pièce, ces torons présentant des fibres formant un angle inférieur ou égal à 15° avec ladite direction de sdlicitation en traction.

Comme pour le plan de sollicitation en cisaillement, l'homme du métier est à même d'identifier sur la préforme fibreuse une direction de sollicitation en traction de la pièce. La direction de sollicitation en traction peut être la direction chaine ou la direction trame.

Une telle caractéristique permet avantageusement d'optimiser la résistance en traction de la pièce du fait du rapprochement des fibres de la direction de sollicitation en traction.

En particulier, les torons dont les fibres sont orientées par rapport à la ligne moyenne comme indiqué plus haut peuvent en outre vérifier cette condition d'orientation des fibres le long de la direction de sollicitation en traction. En variante, d'autres torons que ceux dont les fibres sont orientées par rapport à la ligne moyenne comme indiqué plus haut peuvent vérifier cette condition d'orientation des fibres le long de la direction de sollicitation en traction.

Dans un exemple de réalisation, on a, dans une première zone dudit plan de sollicitation en cisaillement, un premier ensemble de torons de chaîne, respectivement de trame, qui présentent des fibres formant un premier angle compris entre 10° et 50° avec leur ligne moyenne, et dans laquelle on a, dans une deuxième zone dudit plan de sollicitation en cisaillement différente de la première, un deuxième ensemble de torons de chaîne, respectivement de trame, qui présentent des fibres formant un deuxième angle avec leur ligne moyenne, ledit deuxième angle étant différent dudit premier angle.

Dans cet exemple, l'orientation des fibres par rapport à la ligne moyenne varie en fonction de la position dans la préforme fibreuse. Un tel exemple permet de concevoir la pièce d'une manière optimisée lorsque l'on cherche qu'elle résiste à différents types de sollicitations mécaniques s'exerçant à différents endroits de celle-ci.

Selon l'invention, ledit plan de sollicitation en cisaillement peut correspondre au plan défini par les directions chaine et trame du tissage tridimensionnel. Le plan de sollicitation en cisaillement dépend de la pièce de turbomachine considérée.

Toujours selon l'invention, le plan de sollicitation en cisaillement peut correspondre au plan défini par la direction chaine et la direction d'épaisseur du tissage tridimensionnel, ou au plan défini par la direction trame et la direction d'épaisseur du tissage tridimensionnel.

Dans un exemple de réalisation, les torons tissés sont constitués par un tressage de torons élémentaires. D'autres exemples sont possibles, comme cela sera évoqué plus bas. Les torons utilisables peuvent en particulier être obtenus par retordage ou torsadage ou par combinaison de ces différentes méthodes.

Dans un exemple de réalisation, les torons tissés sont formés de fibres de carbone ou de fibres d'un matériau céramique différent du carbone. Dans le cas des fibres en matériau céramique différent du carbone, les torons peuvent être formés de fibres d'un carbure ou d'un oxyde. En particulier, les fibres peuvent être en carbure de silicium ou en alumine. Les torons tissés peuvent encore être formés de fibres de verre ou de fibres polymériques.

Dans un exemple de réalisation, la préforme est une préforme d'aube de turbomachine. La préforme peut être une préforme d'une aube de rotor (aube rotative) ou de stator (aube fixe). La préforme peut être une préforme d'une aube de soufflante ou d'une aube de turbine.

Dans un exemple de réalisation, la préforme est une préforme de carter de turbomachine. La préforme peut être une préforme de carter de soufflante, de carter intermédiaire ou de carter d'échappement.

La préforme peut encore être une préforme de secteur d'anneau de turbine ou de distributeur.

L'invention concerne en outre une pièce de turbomachine en matériau composite comprenant un renfort fibreux formé par une préforme fibreuse telle que décrite plus haut, et une matrice densifiant le renfort fibreux. La pièce peut être une pièce de turbomachine d'aéronef.

L'invention concerne en outre un procédé de fabrication d'une préforme fibreuse telle que décrite plus haut, comprenant au moins :
- l'obtention d'une pluralité de torons en conférant aux fibres constitutives de chaque toron un angle compris entre 10° et 50° avec la ligne moyenne dudit toron, et
- le tissage tridimensionnel de la préforme en utilisant les torons ainsi obtenus.

Dans un exemple de réalisation, les torons sont obtenus par l'un au moins d'un : tressage de torons élémentaires, retordage de torons élémentaires ou torsadage de faisceaux de fibres. On peut combiner ces méthodes pour obtenir les torons destinés à être tissés et ainsi par exemple retordre des torons élémentaires torsadés ou tresser des torons élémentaires retordus. A titre d'exemple, le taux volumique de fibres dans les torons utilisés dans le tissage peut être compris entre 40% et 85%, par exemple entre 50% et 75%.

### Brève description des dessins

[Fig. 1] La figure 1 illustre, de manière schématique et partielle, un exemple de préforme fibreuse selon l'invention,
[Fig. 2] La figure 2 illustre, de manière schématique et partielle, une variante de préforme fibreuse selon l'invention,
[Fig. 3] La figure 3 illustre, de manière schématique et partielle, une autre variante de préforme fibreuse selon l'invention,
[Fig. 4] La figure 4 illustre de manière schématique un exemple de toron utilisable dans le cadre de l'invention,
[Fig. 5] La figure 5 illustre de manière schématique une variante de toron utilisable dans le cadre de l'invention,
[Fig. 6] La figure 6 illustre de manière schématique une autre variante de toron utilisable dans le cadre de l'invention,
[Fig. 7] La figure 7 illustre une aube de soufflante selon l'invention, et
[Fig. 8] La figure 8 illustre un carter de turbomachine selon l'invention.

### Description des modes de réalisation

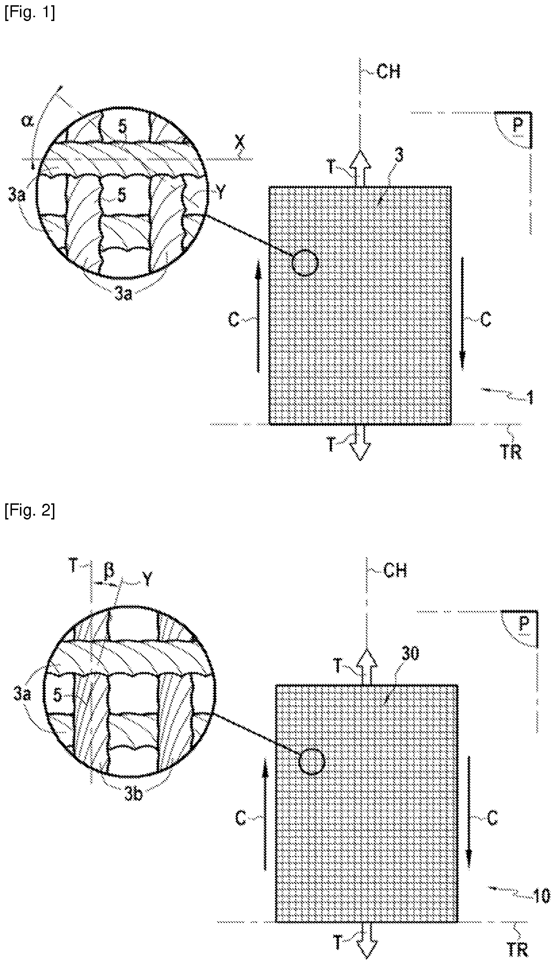

La figure 1 illustre de manière schématique un exemple de préforme 1 selon l'invention. La préforme fibreuse 1 est formée d'un tissage tridimensionnel 3 d'une pluralité de torons 3a. Chaque toron 3a est formé par une pluralité de fibres 5 solidaires entre elles. Ces fibres 5 sont orientées de manière particulière par rapport à la ligne moyenne X de chacun des torons 3a. Par « tissage tridimensionnel » ou « tissage 3D », on entend un mode de tissage par lequel certains au moins des torons de trame lient des torons de chaîne sur plusieurs couches de torons de chaîne ou inversement. Une inversion des rôles entre chaine et trame est possible dans le présent texte et doit être considérée comme couverte aussi par les revendications. La préforme fibreuse peut présenter une armure de tissage interlock. Par tissage « interlock », on entend ici une armure de tissage dans laquelle chaque couche de torons de trame lie plusieurs couches de torons de chaîne, avec tous les torons d'une même colonne de trame ayant le même mouvement dans le plan de l'armure. D'autres armures de tissage sont envisageables. La préforme fibreuse 1 peut être formée par un seul tissu correspondant au tissage 3D. On peut ainsi ne pas utiliser de texture supplémentaire reliée au tissage 3D pour constituer la préforme fibreuse 1.

Le plan P de sollicitation en cisaillement correspond ici au plan de la figure 1 (plan de la feuille) et est défini par les directions chaîne CH et trame TR. Le plan P de sollicitation en cisaillement contient les directions d'application des efforts de cisaillement qui sont représentées par les flèches C à la figure 1. Le tissage 3 comprend des torons 3a s'étendant selon la direction chaîne CH ainsi que des torons 3a s'étendant selon la direction trame TR qui sont orthogonaux aux torons 3a s'étendant selon la direction chaine CH. Dans l'exemple illustré, le tissage 3 comprend des torons colinéaires aux directions C d'application des efforts de cisaillement et des torons orthogonaux à ces directions C.

Dans l'exemple illustré à la figure 1 la totalité des torons 3a présents dans le plan P de sollicitation en cisaillement présentent la même orientation de fibres par rapport à leur ligne moyenne X. Dans cet exemple, les fibres 5 constitutives de chaque toron 3a de chaine ou de trame s'étendent selon une direction, représentée par l'axe Y pour les torons de trame à la figure 1, qui forme un angle noté α compris entre 10° et 50° avec la direction moyenne X dudit toron. Cet angle α peut par exemple être compris entre 30° et 50° et peut par exemple être sensiblement égal à 45°. On a aussi représenté à la figure 1 une direction de sollicitation en traction matérialisée par la flèche T. Dans l'exemple illustré et afin d'optimiser les propriétés de résistance à la traction, une partie des torons (ici les torons de chaine) est colinéaire à la direction T de sollicitation en traction. L'autre partie des torons (ici les torons de trame) est orthogonale à la direction T de sollicitation en traction.

Dans l'exemple qui vient d'être décrit en lien avec la figure 1, les torons de chaine ainsi que les torons de trame présentent des fibres 5 formant un angle compris entre 10° et 50° avec leur ligne moyenne X. Dans l'exempé de la figure 1, l'angle formé par les fibres par rapport à la ligne moyenne est le même pour les torons de chaine et pour les torons de trame.

La figure 2 illustre, de manière schématique et partielle, une variante de préforme fibreuse 10 selon l'invention qui diffère de l'exemple illustré à la figure 1 en ce que les fibres des torons 3a de trame sont orientées de manière différente par rapport à la ligne moyenne que les fibres des torons 3b de chaîne.

Dans le tissage 30 de la figure 2, les torons 3b de chaine présentent des fibres 5 formant un angle β inférieur ou égal à 15° avec la direction T de solicitation en traction qui est ici dirigée le long de la direction CH chaîne. L'angle β peut être inférieur ou égal à 10° et par exemple compris entre 5° et 10°. Au moins 10%, par exemple au moins 25%, par exemple au moins 50%, par exemple au moins 75%, par exemple la totalité des torons 3b de chaine peuvent présenter des fibres formant un angle β inférieur ou égal à 15° avec la direction T de solicitation en traction.

Dans cette configuration, les fibres des torons 3a de trame forment un angle compris entre 10° et 50° avec la ligne moyenne des torons 3a de trame et permettent ainsi d'améliorer la résistance en cisaillement de la pièce. En outre, dans cette configuration, les fibres des torons 3b de chaine sont rapprochées de la direction T de sollicitation en traction de sorte à optimiser la résistance en traction de la pièce. Une telle configuration permet ainsi d'obtenir une bonne résistance au cisaillement tout en optimisant la résistance à la traction.

Dans les exemples qui viennent d'être décrits en lien avec les figures 1 et 2, l'angle formé par les fibres des torons de chaine est uniforme dans tout le plan P de sollicitation en cisaillement et l'angle formé par les fibres des torons de trame est uniforme dans tout le plan P de sollicitation en cisaillement. On va maintenant décrire une variante de réalisation dans lequel l'angle des fibres dans les torons de chaine ou de trame varie en fonction de la position dans la préforme fibreuse.

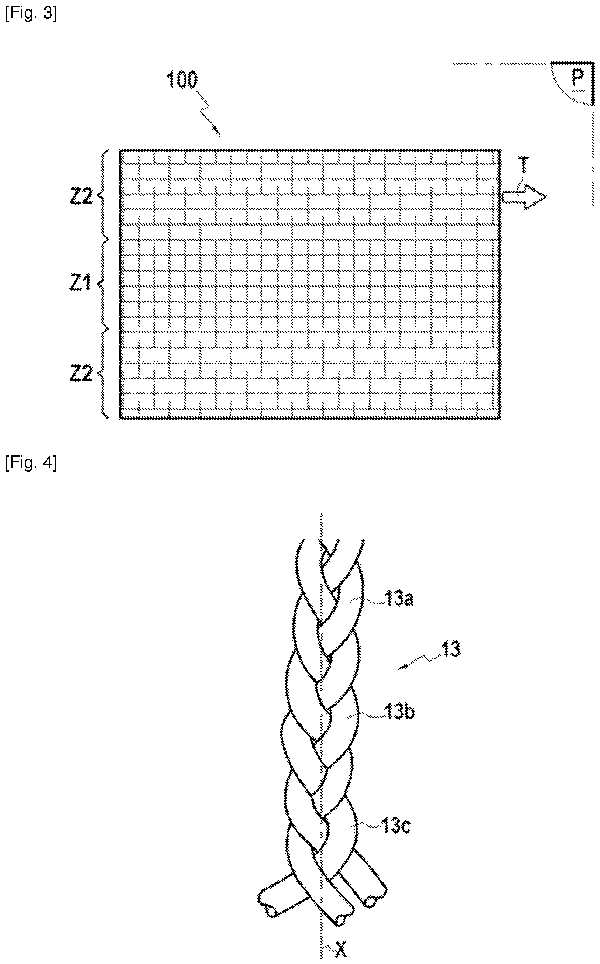

La figure 3 illustre une variante de préforme fibreuse 100 pour laquelle le plan P de sollicitation en cisaillement présente différentes zones qui comportent des torons dont les fibres sont orientées différemment par rapport à leur ligne moyenne. Plus particulièrement dans l'exemple illustré, le plan P de sollicitation en cisaillement comprend une première zone Z1 qui présente un premier ensemble de torons de chaine ayant des fibres formant un premier angle compris entre 10° et 50° avec leur ligne moyenne. Le plan P de sollicitation en cisaillement comprend en outre des deuxièmes zones Z2 qui présentent un deuxième ensemble de torons de chaine ayant des fibres formant un deuxième angle différent du premier angle avec leur ligne moyenne. La première zone Z1 est, dans l'exemple illustré, située entre les deux deuxièmes zones Z2.

La première Z1 et les deuxièmes Z2 zones peuvent par exemple être décalées le long de l'épaisseur de la préforme fibreuse 100. On peut par exemple avoir dans les deuxièmes zones Z2 des torons de chaine avec des fibres rapprochées de la direction T de sollicitation en traction. Selon cet exemple, les torons de chaine de la première zone Z1 contribuent à améliorer la résistance au cisaillement et les torons de chaine de la deuxième zone Z2 contribuent à améliorer la résistance à la traction. Une telle configuration peut trouver un intérêt dans le cas d'une pièce soumise à de la flexion, couplée avec de la torsion. Le coeur du matériau matérialisé par la première zone Z1 est très résistant au cisaillement en orientant les fibres à l'intérieur même des torons de la manière indiquée plus haut par rapport à la ligne moyenne. Les peaux, matérialisées par les deuxièmes zones Z2, sont quant à elles très résistantes en traction, besoin nécessaire à la flexion, en orientant les fibres à l'intérieur des torons de sorte à minimiser l'angle que font ces dernières avec la direction T de sollicitation en traction.

D'autres variantes sont possibles par rapport aux exemples non limitatifs illustrés aux figures 1 à 3. Par exemple, on pourrait modifier la figure 2 en conservant l'orientation des fibres dans les torons de trame 3a mais en utilisant pour les torons 3b de chaîne des faisceaux de fibres dont les fibres sont colinéaires à la direction T (angle β = 0°). On peut ainsi avoir des fibres orientées à l'intérieur des torons uniquement pour les torons de trame (ou en variante de chaine).

On a décrit différentes possibilités pour l'orientation des fibres des torons au sein de la préforme fibreuse. On va maintenant décrire différents types de torons utilisables dans le cadre de l'invention pour lesquels les fibres sont inclinées par rapport à la ligne moyenne X.

Les torons utilisés dans le tissage 3D peuvent être tressés. Cette possibilité est illustrée à la figure 4 qui schématise un toron 13 formé par une tresse de torons élémentaires 13a-13c. On a représenté un toron 13 formé par tressage de trois torons élémentaires 13a-13c mais on ne sort pas du cadre de l'invention si le toron est formé par tressage d'un nombre différent de torons élémentaires. Dans le cas d'un tressage, les torons élémentaires 13a-13c sont entrelacés les uns avec les autres pour constituer le toron 13 destiné à être tissé pour former la préforme fibreuse.

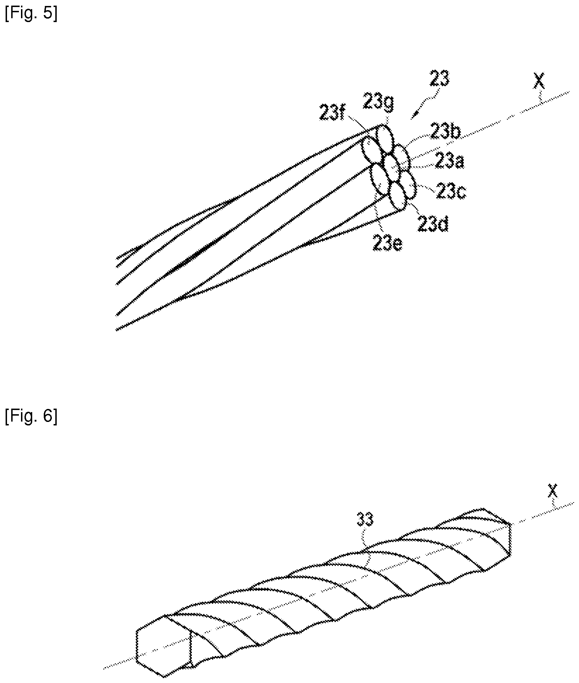

Dans la variante illustrée à la figure 5, les torons 23 peuvent être préparés en retordant des torons élémentaires 23a-23g. Comme pour le cas du tressage, le nombre de torons élémentaires retordus peut varier et n'est pas limité à l'exemple illustré. Le retordage aboutit à un assemblage des torons élémentaires 23a-23g en hélice pour former le toron 23 destiné à être tissé pour former la préforme fibreuse.

Dans une autre variante telle qu'illustrée à la figure 6, les torons 33 peuvent être préparés par torsadage d'un faisceau de fibres. Dans ce cas, un même faisceau de fibres est tordu autour de sa ligne moyenne X pour conférer aux fibres l'orientation souhaitée par rapport à cette ligne X.

Les techniques de tressage, torsadage et retordage sont connues en soi et il va des connaissances générales de l'homme du métier de les mettre en oeuvre afin d'atteindre l'orientation souhaitée pour les fibres à l'intérieur des torons. L'homme du métier reconnaîtra toutefois que d'autres méthodes sont envisageables pour orienter les fibres d'un toron par rapport à sa ligne moyenne. Les méthodes de tressage, retordage et torsadage sont uniquement fournies à titre d'exemples de méthodes utilisables. Comme indiqué plus haut, ces méthodes peuvent être combinées pour obtenir les torons destinés à être tissés.

Quel que soit le mode de réalisation considéré, les torons utilisés pour tisser la préforme fibreuse peuvent être formés de fibres de carbone ou de fibres d'un matériau céramique différent du carbone, comme le carbure de silicium ou l'alumine, ou de fibres de verre ou polymériques.

L'invention repose sur le fait d'avoir dans le plan de sollicitation en cisaillement de la pièce, un groupe de torons dont chaque toron de ce groupe présente des fibres formant un angle compris entre 10° et 50° avec la ilgne moyenne dudit toron. Quel que soit le mode de réalisation considéré, au moins 10%, par exemple au moins 25%, par exemple au moins 50%, par exemple au moins 75%, par exemple la totalité des torons présents dans le plan de sollicitation en cisaillement présentent des fibres formant un angle compris 10° et 50° avedeur ligne moyenne.

On a décrit différentes structures pour la préforme fibreuse et les torons la constituant. On va maintenant décrire la suite du procédé de fabrication de la pièce turbomachine qui comprend la densification de la préforme fibreuse obtenue par une matrice.

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée.

La transformation du précurseur en matrice est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

On peut utiliser une résine époxyde pour obtenir une matrice organique. Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

D'autres méthodes sont envisageables pour former la matrice comme par exemple l'infiltration chimique en phase vapeur (« Chemical Vapor Infiltration ») ou l'infiltration à l'état fondu (« Melt-Infiltration »). On peut bien entendu combiner ces différentes techniques afin de former la matrice.

La pièce de turbomachine peut être une pièce en matériau composite à matrice organique, carbone ou en matériau céramique différent du carbone, comme un carbure ou un oxyde. La matrice peut par exemple être en carbure de silicium ou en alumine.

On va maintenant décrire deux exemples de pièces de turbomachine pouvant incorporer la préforme fibreuse décrite plus haut en tant que renfort fibreux.

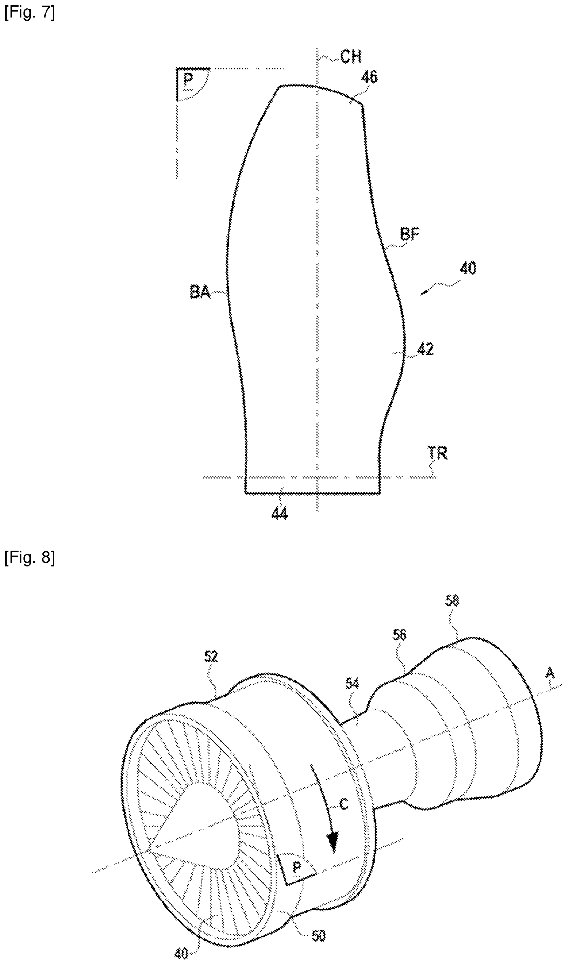

La figure 7 illustre une aube de soufflante 40 qui incorpore une préforme fibreuse décrite plus haut. L'aube 40 comprend un aubage 42 qui s'étend entre une portion de pied 44 et une portion de sommet 46. L'aube 40 présente un bord d'attaque BA et un bord de fuite BF. On a représenté un plan P de sollicitation en cisaillement de l'aube de soufflante 40. Ce plan P correspond au plan défini par la hauteur et la largeur de l'aube. Dans l'exemple illustré, le plan P est défini par les directions chaine CH et trame TR. La direction chaine CH est orientée le long de la hauteur de l'aube 40 et la direction trame TR le long de la largeur de l'aube 40. D'autres plans de sollicitation en cisaillement existent comme les plans hauteur / épaisseur (chaîne / épaisseur) et largeur / épaisseur (trame / épaisseur).

La figure 8 illustre une variante de pièce de turbomachine constituée par un carter de soufflante 50 de moteur aéronautique à turbine à gaz. Un tel moteur, comme montré schématiquement par la figure 8 comprend, de l'amont vers l'aval dans le sens de l'écoulement de flux gazeux, une soufflante disposée en entrée du moteur comprenant le carter de soufflante 50, un compresseur 52, une chambre de combustion 54, une turbine haute-pression 56 et une turbine basse pression 58. Dans cet exemple le plan P de sollicitation en cisaillement est défini par les directions circonférentielle C et axiale A du carter de soufflante 50.

Selon une variante, la pièce de turbomachine pourrait être un carter intermédiaire, c'est-à-dire le carter situé entre le carter de soufflante et le carter d'échappement, ou le carter d'échappement.

### Exemple

On a réalisé une simulation numérique visant à évaluer les propriétés mécaniques d'une préforme fibreuse tissée 3D avec une armure de tissage de type interlock à partir de torons formés par tressage de torons élémentaires. Les fibres constitutives de chacun des torons formaient un angle de 30° avecla ligne moyenne dudit toron. Les torons élémentaires utilisés étaient constitués de fibres de carbone de référence T-650. La simulation effectuée a montré un gain très significatif du module de cisaillement dans le plan de tissage (plan chaine/trame) de plus de 200% par rapport au cas où la préforme fibreuse était formée de torons constitués d'un faisceau de fibres non orientées faisant un angle de 0° avec la ligne moyenne. Le taux volumique de fibres dans les torons considérés était de 72%.

L'expression « compris entre ... et ... » doit se comprendre comme incluant les bornes.

## Revendications

1. Pièce de turbomachine (40 ; 50) en matériau composite comprenant un renfort fibreux formé par une préforme fibreuse (1 ; 10 ; 100), et une matrice densifiant le renfort fibreux, ladite préforme fibreuse présentant un tissage tridimensionnel formé par une pluralité de torons (3a ; 3b ; 13 ; 23 ; 33) tissés,
la pièce étant **caractérisée en ce que**, dans un plan (P) de sollicitation en cisaillement de la pièce, tout ou partie des torons présents dans ce plan présentent des fibres (5) formant un angle (α) compris entre 10° et 50° avec leur ligne moyenne (X) et **en ce que** ledit plan (P) de sollicitation en cisaillement correspond au plan défini par les directions chaine (CH) et trame (TR) du tissage tridimensionnel, ou au plan défini par la direction chaine et la direction d'épaisseur du tissage tridimensionnel, ou au plan défini par la direction trame et la direction d'épaisseur du tissage tridimensionnel.

2. Pièce selon la revendication 1, dans laquelle ledit angle (α) est compris entre 30° et 50°.

3. Pièce selon l'une quelconque des revendications 1 ou 2, dans laquelle la pièce comprend des torons (3b) présents dans ledit plan (P) de sollicitation en cisaillement et s'étendant le long d'une direction (T) de sollicitation en traction de la pièce, ces torons présentant des fibres (5) formant un angle (β) inférieur ou égal à 15° avec ladite direction de sollicitation en traction.

4. Pièce selon la revendication 1 à 3, dans laquelle on a, dans une première zone (Z1) dudit plan (P) de sollicitation en cisaillement, un premier ensemble de torons de chaîne, respectivement de trame, qui présentent des fibres formant un premier angle compris entre 10° et 50° avec leur ligne moyenne, et dans laquelle on a, dans une deuxième zone (Z2) dudit plan de sollicitation en cisaillement différente de la première, un deuxième ensemble de torons de chaîne, respectivement de trame, qui présentent des fibres formant un deuxième angle avec leur ligne moyenne, ledit deuxième angle étant différent dudit premier angle.

5. Pièce selon l'une quelconque des revendications 1 à 4,
dans laquelle les torons (13) tissés sont constitués par un tressage de torons (13a-13c) élémentaires.

6. Pièce selon l'une quelconque des revendications 1 à 5,
dans laquelle les torons (3a ; 3b ; 13 ; 23 ; 33) tissés sont formés de fibres de carbone ou de fibres d'un matériau céramique différent du carbone.

7. Pièce selon l'une quelconque des revendications 1 à 6,
dans laquelle la pièce est une aube (40) de turbomachine.

8. Pièce selon l'une quelconque des revendications 1 à 6,
dans laquelle la pièce est un carter (50) de turbomachine.

9. Procédé de fabrication d'une pièce selon l'une quelconque
des revendications 1 à 8, comprenant au moins :
- l'obtention d'une pluralité de torons (3a ; 3b ; 13 ; 23 ; 33) en conférant aux fibres (5) constitutives de chaque toron un angle (α) compris entre 10° et 50° avec la ligne moyenne (X) dudit toron,
- le tissage tridimensionnel de la préforme en utilisant les torons ainsi obtenus, et
- la densification de la préforme obtenue par la matrice.

10. Procédé selon la revendication 9, dans lequel les torons (13) sont obtenus par l'un au moins d'un : tressage de torons élémentaires (13a-13c), retordage de torons élémentaires (23a-23g) ou torsadage de faisceaux de fibres.

## Patentansprüche

1. Turbomaschinen-Bauteil (40; 50) aus Verbundwerkstoff, der eine Faserverstärkung, die aus einer Faservorform (1; 10; 100) gebildet ist, und eine Matrix umfasst, welche die Faserverstärkung verdichtet, wobei die Faservorform ein dreidimensionales Gewebe aufweist, das durch mehrere gewobene Kardeele (3a; 3b; 13; 23; 33) gebildet ist,
wobei das Bauteil **dadurch gekennzeichnet ist, dass** in einer Scherbeanspruchungsebene (P) des Bauteils sämtliche oder ein Teil der Kardeele, die in dieser Ebene vorhanden sind, Fasern (5) aufweisen, die einen Winkel (α) von zwischen 10° und 50° mit ihrer Mittellinie (X) bilden, und dadurch, dass die Scherbeanspruchungsebene (P) der Ebene, die durch die Kett- (CH) und die Schussrichtung (TR) des dreidimensionalen Gewebes definiert ist, oder der Ebene, die durch die Kettrichtung und die Dickenrichtung des dreidimensionalen Gewebes definiert ist, oder der Ebene entspricht, die durch die Schussrichtung und die Dickenrichtung des dreidimensionalen Gewebes definiert ist.

2. Bauteil nach Anspruch 1, wobei der Winkel (α) zwischen 30° und 50° liegt.

3. Bauteil nach einem der Ansprüche 1 oder 2, wobei das Bauteil Kardeele (3b) umfasst, die in der Scherbeanspruchungsebene (P) vorhanden sind und sich entlang einer Zugbeanspruchungsrichtung (T) des Bauteils erstrecken, wobei diese Kardeele Fasern (5) aufweisen, die einen Winkel (β) von kleiner oder gleich 15° mit der Zugbeanspruchungsrichtung bilden.

4. Bauteil nach Anspruch 1 bis 3, wobei in einer ersten Zone (Z1) der Scherbeanspruchungsebene (P) eine erste Menge von Kett- beziehungsweise Schusskardeelen vorhanden ist, die Fasern aufweisen, die einen ersten Winkel von zwischen 10° und 50° mit ihrer Mittellinie bilden, und wobei in einer zweiten Zone (Z2) der Scherbeanspruchungsebene, die sich von der ersten unterscheidet, eine zweite Menge von Kett- bzw. Schusskardeelen vorhanden ist, die Fasern aufweisen, die einen zweiten Winkel mit ihrer Mittellinie bilden, wobei der zweite Winkel sich von dem ersten Winkel unterscheidet.

5. Bauteil nach einem der Ansprüche 1 bis 4, wobei die gewobenen Kardeele (13) aus einem Geflecht von Elementarkardeelen (13a - 13c) bestehen.

6. Bauteil nach einem der Ansprüche 1 bis 5, wobei die gewobenen Kardeele (3a; 3b; 13; 23; 33) aus Kohlenstofffasern oder aus Fasern eines Keramikwerkstoffs gebildet sind, der sich von Kohlenstoff unterscheidet.

7. Bauteil nach einem der Ansprüche 1 bis 6, wobei das Bauteil eine Turbomaschinenschaufel (40) ist.

8. Bauteil nach einem der Ansprüche 1 bis 6, wobei das Bauteil ein Turbomaschinengehäuse (50) ist.

9. Verfahren zur Herstellung eines Bauteils nach einem der Ansprüche 1 bis 8, das mindestens umfasst:
- das Erhalten mehrerer Kardeele (3a; 3b; 13; 23; 33), indem den Fasern (5), aus denen jedes Kardeel besteht, ein Winkel (α) von zwischen 10° und 50° mit der Mittellinie (X) des Kardeels verliehen wird,
- das dreidimensionale Weben der Vorform unter Verwendung der so erhaltenen Kardeele, und
- die Verdichtung der erhaltenen Vorform durch die Matrix.

10. Verfahren nach Anspruch 9, wobei die Kardeele (13) erhalten werden durch mindestens eines von: Flechten von Elementarkardeelen (13a - 13c), Zwirnen von Elementarkardeelen (23a - 23g) oder Verdrillen von Faserbündeln.

## Claims

1. A turbomachine component (40; 50) made of composite material comprising a fibrous reinforcement formed by a fibrous preform (1; 10; 100), and a matrix densifying the fibrous reinforcement, said fibrous preform having a three-dimensional weave formed by a plurality of woven strands (3a; 3b; 13; 23; 33)
the component being **characterized in that**, in a shear plane (P) of the component, all or part of the strands present in this plane have fibers (5) forming an angle (α) comprised between 10° and 50° with their centerline (X) and **in that** said shear plane corresponds to the plane defined by the warp and weft directions of the three-dimensional weave, or to the plane defined by the warp direction and the thickness direction of the three-dimensional weave, or to plane defined by the weft direction and the thickness direction of the three-dimensional weave.

2. The component as claimed in claim 1, wherein said angle (α) is comprised between 30° and 50°.

3. The component as claimed in any one of claims 1 or 2, wherein the component comprises strands (3b) present in said shear plane (P) and extending along a tensile stress direction (T) of the component, these strands having fibers (5) forming an angle (β) less than or equal to 15° with said tensile stress direction.

4. The component as claimed in claims 1 to 3, wherein there is, in a first zone (Z1) of said shear plane (P), a first set of warp strands, respectively weft strands, which have fibers forming a first angle comprised between 10° and 50° with their centerline, and wherein there is, in a second zone (Z2) of said shear plane different from the first, a second set of warp strands, respectively weft strands, which have fibers forming a second angle with their centerline, said second angle being different from said first angle.

5. The component as claimed in any one of claims 1 to 4, wherein the woven strands (13) consist of a braid of elementary strands (13a-13c).

6. The component as claimed in any one of claims 1 to 5, wherein the woven strands (3a; 3b; 13; 23; 33) are formed of carbon fibers or of fibers of a ceramic material different from carbon.

7. The component as claimed in any one of claims 1 to 6, wherein the component is a turbomachine blade (40).

8. The component as claimed in any one of claims 1 to 6, wherein the component is a turbomachine casing (50).

9. A process for manufacturing a component as claimed in any one of claims 1 to 8, comprising at least:
- obtaining a plurality of strands (3a; 3b; 13; 23; 33) by giving the constituent fibers (5) of each strand an angle (α) comprised between 10° and 50° with the centerline (X) of said strand,
- three-dimensional weaving of the preform using the strands thus obtained, and
- densification of the preform obtained by the matrix.

10. The process as claimed in claim 9, wherein the strands (13) are obtained by at least one of: braiding elementary strands (13a-13c), twisting elementary strands (23a-23g) or twisting fiber bundles.
